**Europäisches Patentamt**

**European Patent Office**

**Office européen des brevets**

(11) Publication number: **0 152 827**
**B1**

# EUROPEAN PATENT SPECIFICATION

(45) Date of publication of patent specification: **18.10.89**

(51) Int. Cl.⁴: **G 02 F 1/133,** G 02 F 1/137

(21) Application number: **85100951.4**

(22) Date of filing: **30.01.85**

(54) Liquid crystal color display apparatus.

(30) Priority: **31.01.84 JP 16552/84**
**31.01.84 JP 16553/84**
**31.01.84 JP 16554/84**

(43) Date of publication of application:
**28.08.85 Bulletin 85/35**

(45) Publication of the grant of the patent:
**18.10.89 Bulletin 89/42**

(84) Designated Contracting States:
**DE FR GB**

(56) References cited:
**US-A-4 387 965**

**JOURNAL OF PHYSICS D: APPLIED PHYSICS,
vol. 8, no. 13, 1975, pages 1575-1584,
Letchworth, Hertfordshire, GB; C.H.GOOCH et
al.: "The optical properties of twisted nematic
liquid crystal structures with twist angles 90 "**

**PATENTS ABSTRACTS OF JAPAN, vol. 6, no.
168 (P-139)1046r, 2nd September 1982; & JP -
A - 57 84 434 (CASIO KEISANKI K.K.) 26-05-1982
CONFERENCE RECORD OF 1982**

(73) Proprietor: **Matsushita Electric Industrial Co.,
Ltd.**
**1006, Oaza Kadoma**
**Kadoma-shi Osaka-fu, 571 (JP)**

(72) Inventor: **Ogawa, Tetsu**
**8, Enmyoji-Tonoyama 1-chome Oyamazaki-cho
Otokuni-gun Koyoto-pref., 618 (JP)**
Inventor: **Nagata, Seiichi**
**10-4, Takeshirodai 2-cho
Sakai City, 590-01 (JP)**
Inventor: **Hotta, Sadayoshi**
**1-10, Kouda 1-chome
Hirakata City, 573 (JP)**

(74) Representative: **Dr. Elisabeth Jung Dr. Jürgen
Schirdewahn Dipl.-Ing. Claus Gernhardt
P.O. Box 40 14 68 Clemensstrasse 30
D-8000 München 40 (DE)**

(56) References cited:
**INTERNATIONAL DISPLAY RESEARCH
CONFERENCE, Cherry Hill, N.J., 19th-21st
October 1982, IEEE, pages 166-170, New York,
US; T.UCHIDA et al.: "A full-color matrix LCD
with color layers on the electrodes"**

Courier Press, Leamington Spa, England.

**Description**

The present invention relates to a liquid crystal color display apparatus in accordance with the precharacterizing portion of claim 1.

Such an apparatus is e.g. known from the "Conference Record of the 1982 International Display Research Conference", pages 166 to 170, 1982. In this document a 56×56 matrix liquid crystal display with color stripe layers of red, green and blue on the Y-electrodes is described. The primary color stripes of 300 µm pitch are made by photolithography. The adjacent primary colors are visually mixed when observed more than several 10 cm away from the display. Thereby, a full color display is realized.

The present invention is usable for a color display apparatus of a television receiver set, a monitor in a videotape recorder, a view finder of a television camera or a display apparatus of a computer terminal unit.

A liquid crystal color display apparatus has the characteristics of having a small thickness, being operable with a low voltage power source and consuming very small power, and accordingly its market is large. Furthermore, these years demand for a flat type display apparatus has increased rapidly. Liquid crystal color displays apparatuses, which use a number of color filter elements, have been developed from the conventional monocolor type liquid crystal display apparatus and are about to be taken into actual use.

The dynamic scattering mode (hereinafter referred to as DSM), the twisted nematic mode (hereinafter referred to as TN) and the guest-host mode (hereinafter referred to as GH) are considered as operation modes of such liquid crystal color displays apparatuses for use in color displaying. A TN liquid crystal has the characteristic of small driving power, high contrast and bright display.

In the following a conventional liquid crystal color display apparatus comprising a TN liquid crystal and color filter elements for red (hereinafter referred to as R), green (hereinafter referred to as G) and blue (hereinafter referred to as B) is described.

Next, the optical characteristics of a TN liquid crystal which is essential for the present invention, is described.

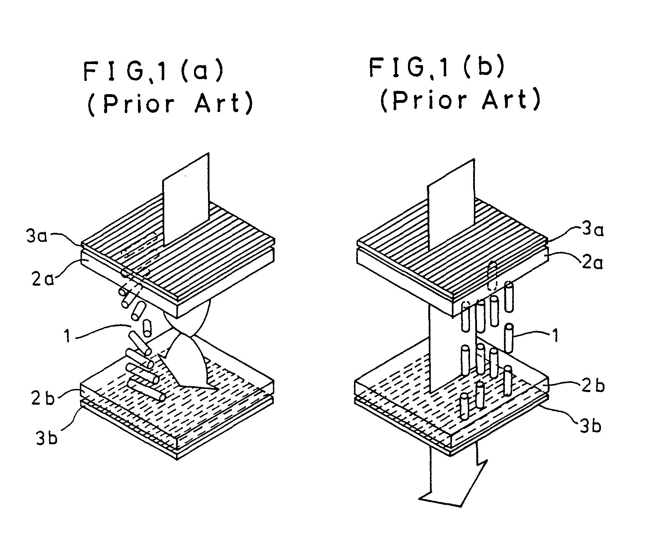

Fig. 1 shows the principle of a display by a transparent type TN liquid crystal display apparatus. A liquid crystal 1 of nematic type, a pair of parallelly disposed transparent substrates 2a and 2b and a liquid crystal 1 combined therebetween constitute a liquid crystal cell. A pair of polarizers 3a and 3b, having their polarizing axes in a vertical relation to each other, are provided on the substrates 2a and 2b, respectively. A thick white arrow indicates the direction of incident light and its polarization.

In the device of Fig. 1, in a 0 voltage application state, the liquid crystal stops light, as is shown in Fig. 1(a). When a voltage above a threshold value (hereinafter referred to as $V_{th}$) is applied, the liquid crystal is realigned in the direction of the electric field (provided that the dielectric constant anisotropy of the liquid crystal is positive), and incident light from the upper substrate passes through the liquid crystal apparatus. Accordingly by application or removal of voltage across the electrodes, a contrast of brightness and darkness is obtainable. Such a liquid crystal apparatus, having the dark state at non-application of voltage across the electrodes on both substrates, is defined as being of the "normally black" type.

In actual practice, transmittance T of a liquid display apparatus is not 0 for 0 volt application. As a result of the optical rotatory dispersion, a linearly polarized light incident to the cell changes into elliptically polarized light and hence passes the cell. Transmittance of parallel light incident normally to the liquid crystal cell at the 0 volt application state is given by the following equation (C. H. Gooch, H. A. Tarry: J. Phys. D:Appl.Phys.8, 1575 (1975)):

$$T=(1+u^2)^{-1} \sin^2 [\theta(1+u^2)^{1/2}] \tag{1},$$

wherein

$$u=\pi d\Delta n/\theta\lambda \tag{2},$$

wherein d is the thickness of the liquid crystal layer, $\Delta n$ is the birefringence of the liquid crystal, $\theta$ is the twist angle of the TN liquid crystal and $\lambda$ is the wavelength of the incident light.

Then, by providing $\theta=\pi/2$, the value of u which satisfies T=0 of the equation (1), is given by:

$$u=\sqrt{4m-1} \tag{3},$$

wherein m is a positive integer.

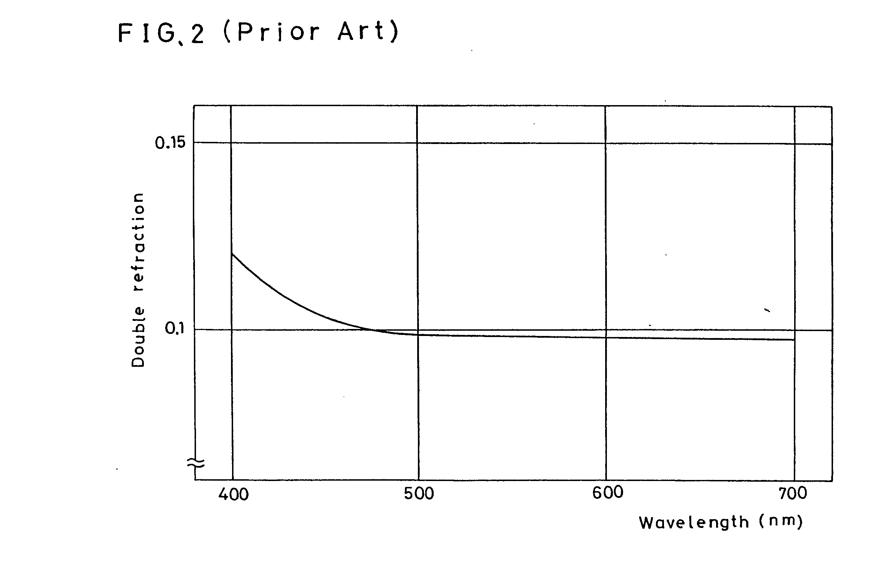

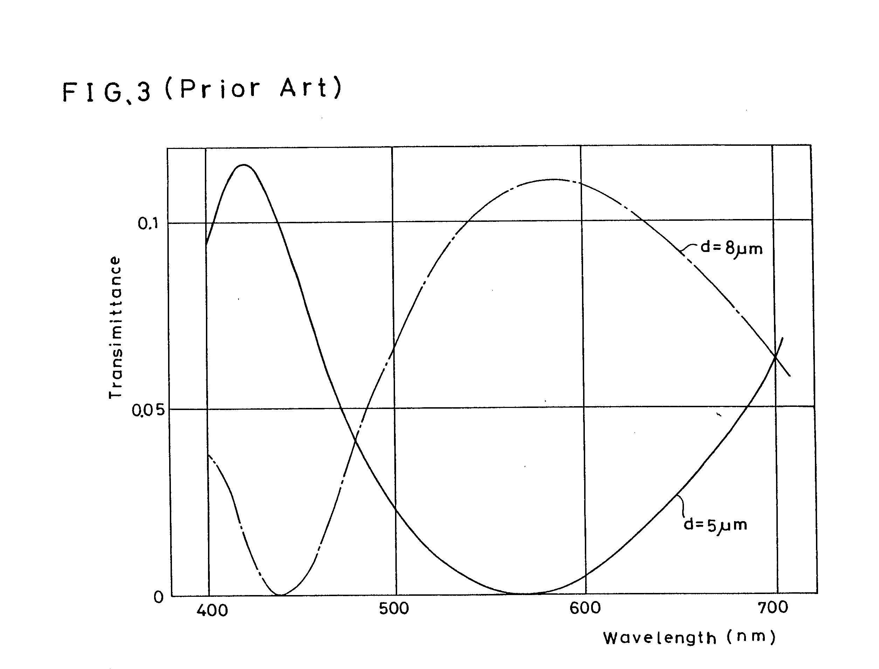

In general, the birefringence $\Delta n$ of the liquid crystal has a dependency on the wavelength of the incident light. Fig. 2 shows the wavelength-dependency of the birefringence $\Delta n$ of a liquid crystal, for example, LIXON 9150 manufactured by Chisso Kabushiki Kaisha. Fig. 3 is a graph made by plotting from the equation (1) by Gooch-Tarry the spectral transmittance characteristic for 0 volt application in a TN liquid crystal cell having the twist angle $\theta$ of 90° for the examples of d=5 µm and d=8 µm.

As shown in Fig. 3, the spectral transmittance characteristic shows about 10% transmittance at its peak in the visible range (400—700 nm), i.e. light is not completely stopped. Accordingly, the cell of d=5 µm shows reddish colors and the cell of d=8 µm shows yellow colors. However, the 5 µm thick cell can stop the light around the wavelength of 570 nm and the 8 µm thick cell can stop the light around 440 nm.

As shown in this actual example, when using the TN mode liquid crystal, problems arise because of insufficient light stopping and resultant coloring in displaying. Apart from mono-color displaying, where such insufficient light stopping and coloring is only a little problem, these problems present a great obstacle for full color displaying.

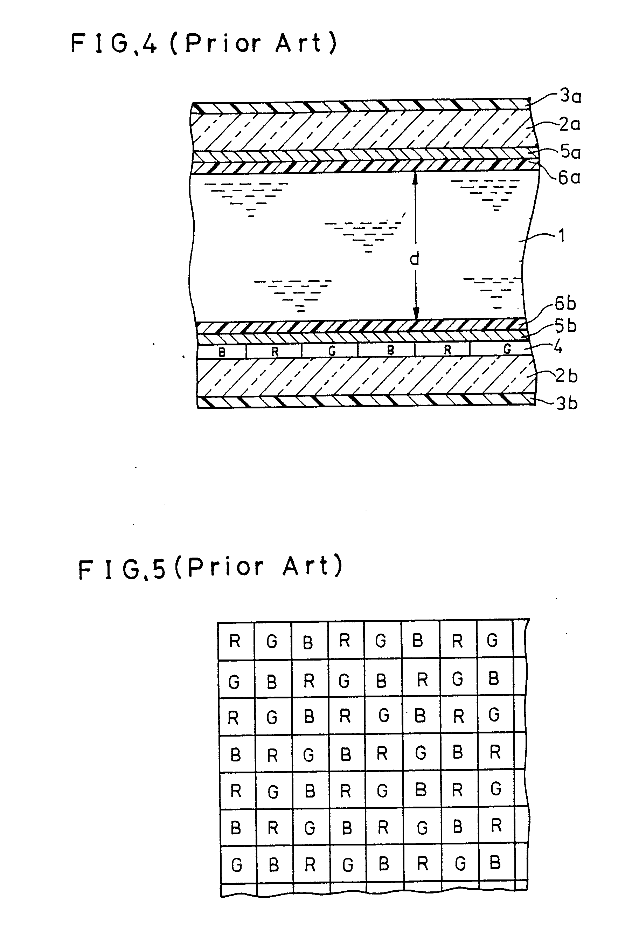

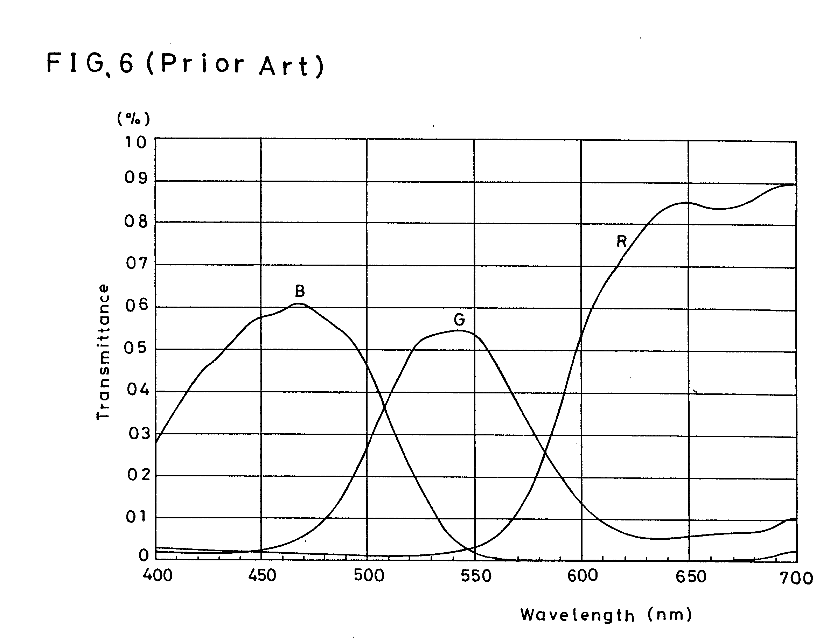

Fig. 4 shows a sectional view of a conventional liquid crystal color display apparatus. As shown in Fig. 4, the apparatus has a color filter having R, G and B color filter elements disposed in a matrix as shown in Fig. 5, and the apparatus has films 6a and 6b formed on the inner wall of the substrate in alignment so as to control initial alignment of the liquid crystal at the 0 volt application state. Therefore by applying a voltage above the threshold voltage $V_{th}$ across the transparent conductive films 5a and 5b, the molecular alignment of the liquid crystal is changed, so as to modulate light passing through the liquid crystal cell. Accordingly, by applying appropriate voltages above the threshold value $V_{th}$ for respective electrodes responding to the R, G, B color filter elements of the picture elements, a full color display can be made by using a red, green and blue addition color mixing method. Fig. 6 shows one example of a spectral transmittance characteristic of the color filter having R, G and B color elements, which is used in this conventional apparatus. In this conventional example, the problems to be considered are leak and undesirable coloring of light at 0 voltage application. Since the contrast ratio is defined as [light transmittance for bright state]/[light transmittance for dark state], in the conventional apparatus the existence of light leaking in the dark state, i.e. the 0 volt application state, results in lowering of the contrast ratio.

In the conventional apparatus configuration, where the thickness d of the liquid crystal layer is uniform for all parts of the R, G and B color picture elements and for example is 5 μm, the light is almost stopped in the elements of the G and R color filters at the 0 voltage application, while the light cannot be stopped at the elements of the B filter sections, as is obvious in Fig. 3 and Fig. 6. Accordingly the apparatus shows blue or violet color as a whole at the 0 voltage application instead of a perfect black. This phenomenon is a grave obstacle in full color displaying by the liquid crystal color display apparatus.

As can be understood from the Gooch-Tarry's equation (1), as the thickness of the liquid crystal layer increases (e.g. above about 10 μm), the above-mentioned light leakage at the 0 voltage application decreases, and accordingly the coloring at the 0 voltage application becomes small. However, when the thickness d increases, such problems are induced as the extension of the response time of the liquid crystal for ON-OFF switching of the applied voltage, the decrease of the view angle and the negative display voltage region, which as will be mentioned later induces color shift by variation of the view angle. Accordingly, such a liquid crystal display apparatus becomes quite poor in color performance characteristics.

Since a liquid crystal color display apparatus using a TN mode liquid crystal is expected to have a good response speed and a wide view angle, the apparatus is liable to be designed with the relation between d and $\Delta n$ to fulfil $u \cong \sqrt{3}$ for green light, namely with a thickness d as short as possible. However, when such a thin liquid crystal layer is used, there is a problem in that light transmittance for wavelengths not fulfilling the condition $u = \sqrt{3}$ becomes dominant, and then the display apparatus shows undesirable and unnatural colors.

As far as the liquid crystal layer of uniform thickness for different color parts is used, a solution of the above-mentioned various problems is impossible.

## Summary of the invention

The purpose of the present invention is to provide an improved liquid crystal color display apparatus capable of solving the above-mentioned problems of the conventional liquid crystal color display apparatuses, thereby to minimize light leaking and resultant coloring of the liquid crystal color display apparatus at the 0 voltage application and to achieve high contrast and a good color performance for a wide view angle of the liquid crystal color display apparatus.

These problems are solved by a liquid crystal color display apparatus having the features of claim 1. Advantageous further developments of this apparatus are indicated in the subclaims.

The liquid crystal color display apparatus in accordance with the present invention has the feature of using a TN mode liquid crystal layer combined with R, G and B color filter elements, wherein the thickness of the liquid crystal layer is varied for respective sections of different color filters.

The invention is further illustrated by the following description of preferred examples and by the drawings.

Fig. 1(a) is a perspective view showing a 0 voltage application state of a normally black type TN liquid crystal display apparatus.

Fig. 1(b) is a perspective view of the liquid crystal display apparatus of Fig. 1(a) at a full voltage application state.

Fig. 2 is a graph showing the spectral distribution of $\Delta n$ for double refraction.

Fig. 3 is a graph showing the spectral distribution of transmittance of a conventional TN mode liquid crystal apparatus for different thicknesses of the liquid crystal layers.

Fig. 4 is a schematic cross sectional view of the conventional liquid crystal color display apparatus.

Fig. 5 is a plan view showing a disposition of color filters of the conventional general color liquid crystal display apparatus.

Fig. 6 is a graph showing one example of the spectral distribution of transmittance of R, G and B color filters used in the general color liquid crystal display apparatus, which are also used in the display apparatus according to the present invention.

Fig. 7 is a graph showing relative spectral energy of the light of a fluorescent lamp in combination with the color liquid crystal display apparatus in accordance with the present invention.

Fig. 8 is a graph showing relations of the thickness d of liquid crystal layer and of the light transmittance for the lights of R, B and G colors.

Fig. 9(a) is a graph showing the spectral distribution of transmittance of light of a normally black type liquid crystal color display apparatus for various applied voltages as parameters.

Fig. 9(b) is a graph showing the spectral distribution of the transmittance of light of a normally white type liquid crystal color display apparatus for various applied voltages as parameters.

Fig. 10 is a graph showing a relation between the applied voltage and the transmittance of light having various wavelengths for a thick (8.0 μ) TN cell.

Fig. 11 is a graph showing characteristic curves of relations between the applied voltage and the transmittance of light having different wavelengths of a liquid crystal color display apparatus embodying the present invention, which are illustrated by a curve "MG" and by curves "STD" for comparison examples.

Fig. 12 is a graph showing the spectral distributions of the transmittance for a 0 voltage application for the color liquid crystal display apparatus embodying the present invention and a comparison example of the prior art.

Fig. 13 is a graph showing the relation between the thickness of the liquid crystal layer and the transmittance for R, G and B light at 0 voltage application in the case of diffused light illumination.

Fig. 14 is a graph showing the relation between the thickness of the liquid crystal layer and the wavelength of minimum transmittance at 0 voltage application in the cases of parallel light illumination and of diffused light illumination.

Fig. 15 is a sectional side view schematically showing the cross section of a color liquid crystal display apparatus embodying the present invention, which is provided with a liquid crystal layer having plural thicknesses for the sections of different color filter elements by changing the thicknesses of color filters.

Fig. 16 is a sectional side view schematically showing the cross section of a color liquid crystal display apparatus embodying the present invention wherein liquid crystal layers have plural thicknesses formed by changing the thicknesses of a substrate.

Fig. 17 is a perspective view schematically showing the overall surface of the color filter substrate embodying the present invention shown in Fig. 16.

Fig. 18 is an enlarged perspective view showing the detailed inner surface configuration of a part of a substrate indicated by chain lines in Fig. 17.

Fig. 19 is a sectional view schematically showing a cross section of a color liquid crystal display apparatus embodying the present invention wherein the liquid crystal layer has plural thicknesses by providing transparent layers of different thicknesses on different color filter element parts of the color filter.

Fig. 20 is a cross sectional view schematically showing a cross section of a color liquid crystal display apparatus embodying the present invention wherein the liquid crystal layer has plural thicknesses by providing transparent layers of different thicknesses under different color element parts of the color filter.

Fig. 21 is a cross sectional view schematically showing a cross section of a color liquid crystal display apparatus embodying the present invention wherein the liquid crystal layer has plural thicknesses by providing transparent layers of different thicknesses on different color element parts of the color filter.

Fig. 22 is a cross sectional view schematically showing a cross section of a color liquid crystal display apparatus embodying the present invention wherein the liquid crystal layer has plural thicknesses by providing transparent layers of different thicknesses under different color element parts of the color filter.

Fig. 23 is a graph showing a relation between the thicknesses of liquid crystal layer of a green cell and the transmittance of R, G and B light.

Fig. 24 is a graph showing a relation between applied voltage and the transmittances of the apparatus embodying the present invention (curves designated by MG) and those of a comparison example (curves designated by STD).

Fig. 25 is a graph showing the spectral distribution of the contrast ratio of a liquid crystal color display apparatus embodying the present invention.

Fig. 26 is a CIE chromaticity diagram showing the range of color reproductions of a color liquid crystal display apparatus embodying the present invention and a comparison liquid crystal color display apparatus of the prior art and a conventional color cathode ray tube.

Fig. 27 is a detailed cross sectional view of a-Si TFT-addressed liquid crystal full color display panel.

Fig. 28 is a circuit diagram of a-Si TFT-addressed liquid crystal full color display panel.

A color display apparatus of the transparent type using a TN mode liquid crystal is described in detail.

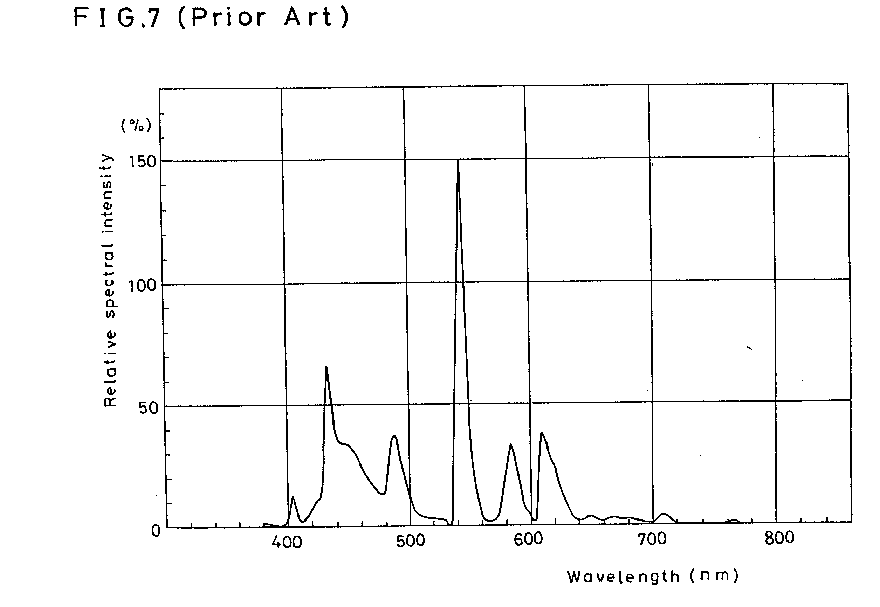

First, as R, G and B color filters a filter having a spectral distribution of a transmittance as shown by Fig. 6, used in combination with a white color fluorescent lamp having a spectral energy distribution as shown in Fig. 7, made by Matsushita Electronic Corporation and being associated with a trade mark PA-LOOK is selected. The spectral energies of R, G and B light energies are represented by the wavelength of 610 nm, 545 nm and 450 nm.

As is obvious from the spectral distribution curve of the relative intensity of Fig. 7, the fluorescent lamp has a spectral characteristic of light like line spectra and gives a color of white light. Such a spectral distribution of a light source is effective for the embodiment of the present invention, though the display apparatus in accordance with the present invention can be used with continuous spectral light such as sunlight.

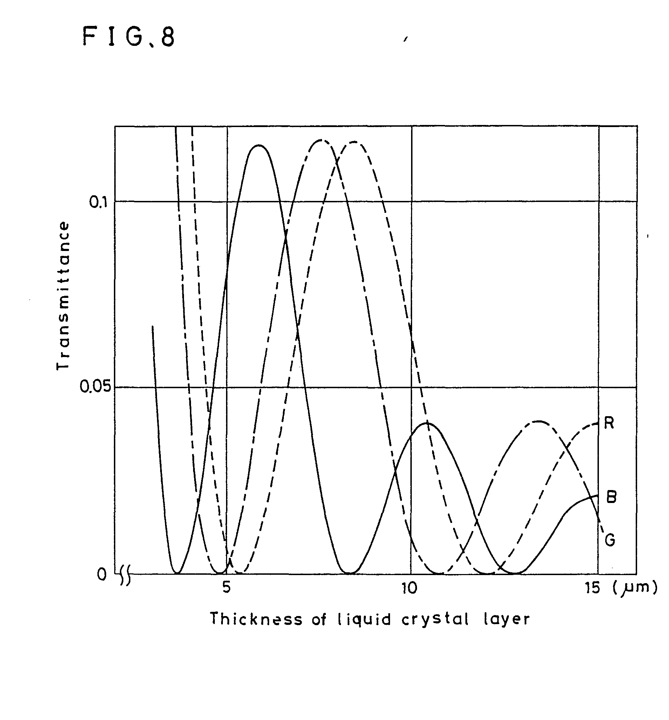

As the TN mode liquid crystal, the above-mentioned LIXON 9150, for instance, is used. According to equation (1), the wavelength of R, G and B lights shows transmittance as shown in Fig. 8 for the variation of the thickness d of the liquid crystal layer in normally black type at 0 voltage application state. Though the left end parts of the curves are omitted in Fig. 8, the curves for R, G and B monotonously increase as the thickness d approaches 0, and at the thickness of d=0 μm all of the curves come to transmittance of 1.

As is obvious from Fig. 8, the transmittance becomes 0, when the thicknesses of the liquid crystal layers are 5.4 μm, 4.8 μm and 3.7 μm for the parts of R, G and B, respectively. At the respective thicknesses of the liquid crystal layer, the light of R, G and B is totally stopped. That is to say, in other words, by selecting the thicknesses $d_R$, $d_G$ and $d_B$ of the liquid crystal layer for the parts corresponding to the R, G and B color filter elements such that $d_R$=5.4 μm, $d_G$=4.8 μm and $d_B$=3.7 μm, respectively, the light is totally stopped at 0 volt application.

The inventors made the following experimental study.

Experimental study 1

As has been described above, the relation between the transmittance and Δn and d of a TN liquid crystal at 0 volt application is given by the Gooch-Tarry's equations (1) and (2). But, in the operation of image display apparatus which requires half tone displaying, the liquid crystal apparatus must be operated between a threshold voltage ($V_{th}$) and a saturation voltage ($V_{sat}$) of the TN liquid crystal, in order to obtain an electrooptical characteristic of the TN liquid crystal under such a low impressed voltage operation.

TABLE 1

| Cell thickness (μm) | | | | | | | | | |
|---|---|---|---|---|---|---|---|---|---|
| NB | 4.1 | 4.6 | 5.2 | 5.7 | 6.3 | 6.6 | 7.1 | 7.5 | 8.0 |
| NW | 4.0 | 4.6 | 5.1 | 5.7 | 6.2 | 6.6 | 7.1 | 7.6 | 8.0 |

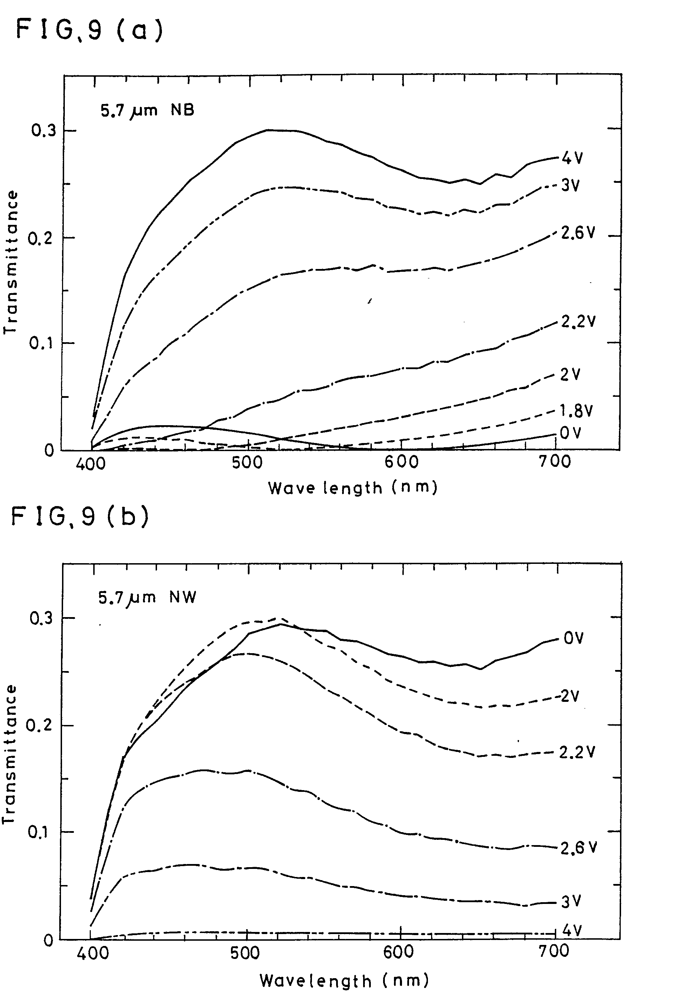

The inventors made 18 sample cells having cell thicknesses as shown in the Table 1 and of NB type and NW type. That is, the eighteen samples are divided into two types of groups, namely, NB type and NW type, by selecting the directions of polarizer to be provided on the substrates. The spectral transmittances of these samples are measured for various applied voltages as parameters. Experimental results of the examples are shown in Fig. 9(a) and Fig. 9(b). In the NB type cell of Fig. 9(a), the condition u=√3 of the equation (3) is fulfilled at λ=600 nm, and this cell can completely cut off red light around λ=600 nm at 0 volt application. On the other hand, bluish light cannot be completely cut off. (The applied voltages are shown as parameters on the left end of the curves). When 1.8 V, which is around the threshold voltage, is impressed, the wavelength which is completely cut off shifts to the shorter wavelength side, and the transmittance of the bluish light decreases. When the impressed voltage is raised, the transmittance of longer wavelength dominantly rises. By impression of a relatively high voltages close to the saturation voltage (above 3 V in the graph), at last, all lights of blue, green and red show almost uniform transmittance. Summarizing the above, at a relatively low impressed voltage (1.8—2.8 V), transmittances of red lights are predominant. On the contrary, in the NW type cell shown in the graph of Fig. 9b, decrease of transmittances of red light occurs at a relatively low impressed voltage region. Naturally, the behaviours of the spectral transmittances of the NB type cell and of the NW type cell for the applied voltages can be said to be in complementary relation to each other.

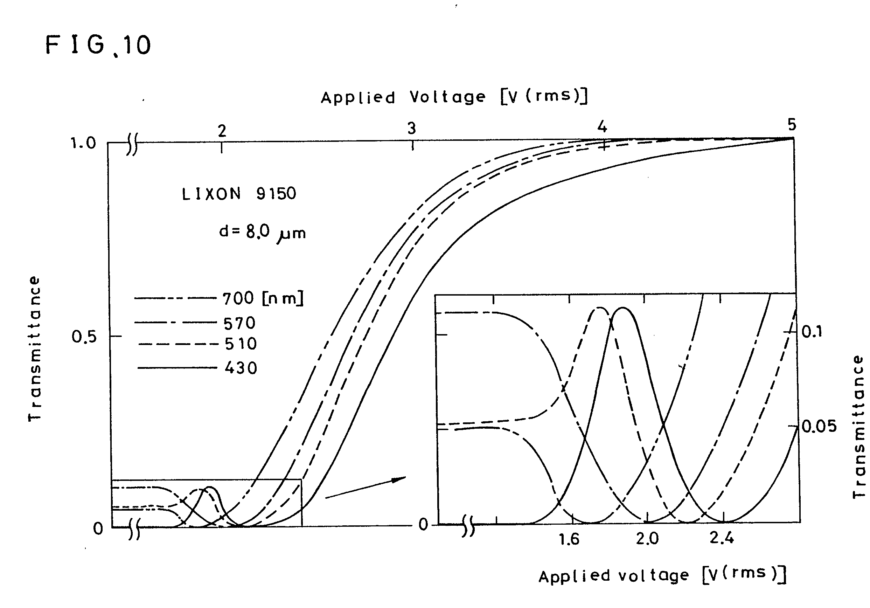

Fig. 10 shows the response characteristics of the transmittance and applied voltage taking the wavelengths as parameters. As is obvious from Fig. 10, light of long wavelengths shows relatively high transmittances at relatively low applied voltages. Furthermore, in the relatively thick cells, as is shown by the inserted graph showing the left end parts of the curves enlarged, there is a undesirable phenomenon that the transmittance decreases as applied voltage increases around the threshold voltage $V_{th}$. When this phenomenon is considered from the view point of image displaying, this phenomenon will cause undesirable inversion of brightness of the image at the range of such low applied voltages.

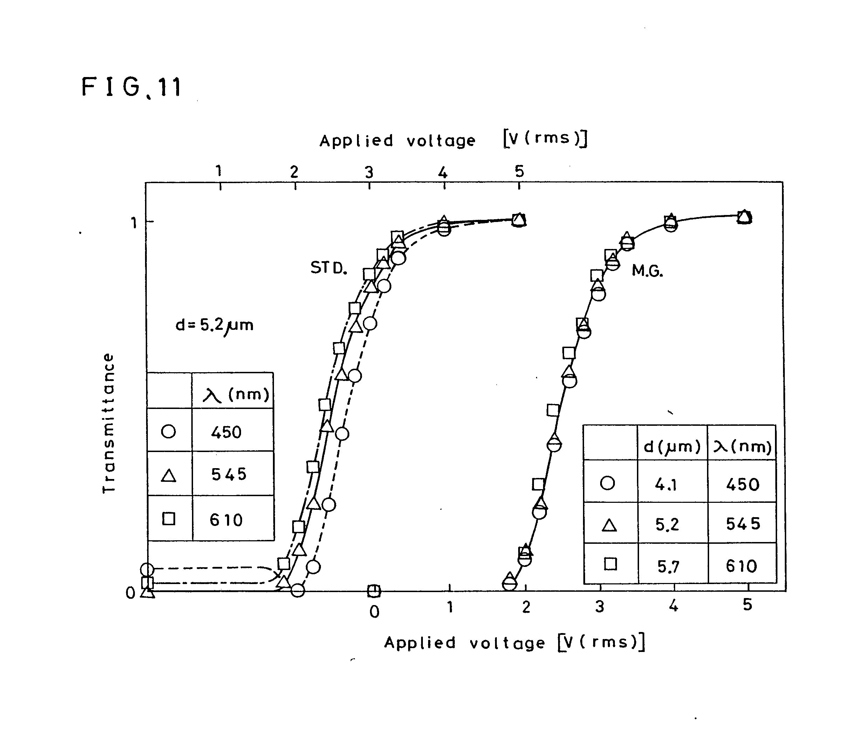

Fig. 11 shows another example of the dependency of light transmittance on the impressed voltage. In the graph, the curves of a group STD show the transmittance of a cell having a 5.2 μm thickness liquid crystal layer, and the three curves correspond to the light of the wavelengths of 610 nm, 545 nm and 450 nm. As is shown by the curves, the relation between the transmittance and the applied voltage depends on the wavelengths and is not uniquely defined by the applied voltage. On the other hand, the curves designated by MG show light transmittances of the cells having 4.1, 5.2 and 5.7 μm thicknesses for light having wavelengths of 450 nm, 545 nm and 610 nm, respectively. From the experimental comparison results shown in Fig. 11, it is shown that, by providing a liquid crystal layer with plural thicknesses for each wavelength of light in a selected appropriate way, the changes of transmittance for representative light

5

become monotonous from the 0 transmittance to saturated transmittance, and that an undesirable wavelength-dependency of the transmittance is eliminated.

On condition that spectrum-analyzed parallel light obtained by a spectroscope is incident on the principal face of the TN liquid crystal cell under 0 volt application, the transmittance shows good agreement with the value expected from the Gooch-Tarry's equation. Furthermore, it is confirmed that at a relatively low applied voltage, transmittance of light of longer wavelength always is predominant as illustrated in Fig. 9(a) and Fig. 10. As is obvious from the curve group MG of Fig. 11, when the liquid crystal layer depth is selected to meet with the wavelength of light, the transmittance light can be changed monotonously from 0 to saturation value and the wavelength dependency of the transmittance can be eliminated.

Next, spectral transmittances of the liquid crystal cells embodying the present invention wherein liquid crystal layer thicknesses $d_R$=5.4 µm, $d_G$=4.8 µm and $d_B$=4.0 µm are selected for the parts of the color filters of R, G and B, respectively for 0 voltage application are calculated by the below mentioned equation (4):

$$T_{MG}=\tfrac{1}{3}\{G(d_R)\cdot T_{FR}+G(d_G)\cdot T_{FG}+G(d_B)\cdot T_{FB}\} \qquad (4),$$

As a comparison example, transmittance of the liquid crystal cell having a uniform liquid crystal layer thickness at 0 volt application is calculated by the below mentioned equation (5).

$$T_{STD}=\tfrac{1}{3}G(d_G)\cdot (T_{FR}+T_{FG}+T_{FB}) \qquad (5),$$

wherein

$$G(d_R)=Sin^2\{\theta(1+u^2)^{1/2}\}/(1+u^2) \qquad (6),$$

$$u=\pi\cdot\Delta n(\lambda)\cdot d_R/\theta\cdot\lambda \qquad (7).$$

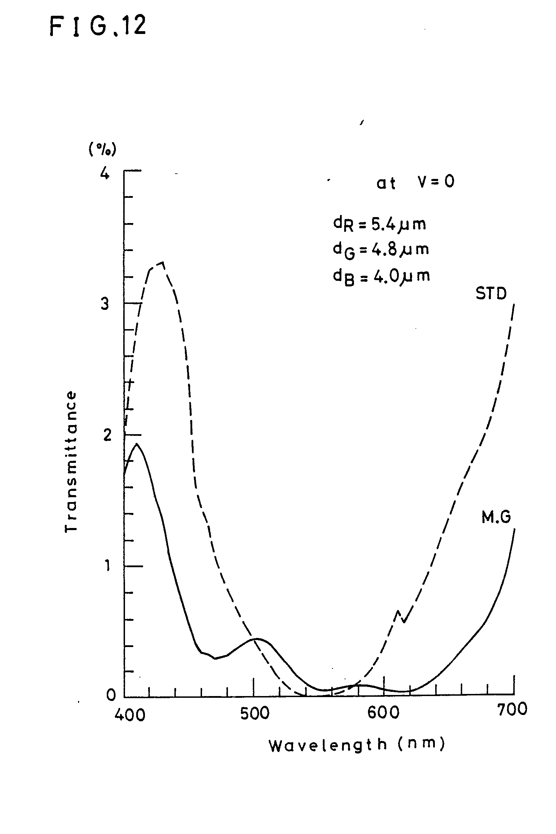

The equations (4) and (5) are made by substituting $d=d_R$ and $\Delta n=\Delta n(\lambda)$ into the equation (1) considering wavelength dispersion of birefringence of the liquid crystal used. $T_{FR}$ is the spectral transmittance of red filter as illustrated in Fig. 6. Of course, R, G and B represent red, green and blue colors. Fig. 12 shows result of the calculation, wherein curve MG shows the results of the multi-space liquid crystal cell embodying the present invention calculated by equation (4), and the curve STD shows the result of the comparison example of the conventional apparatus calculated by equation (5).

As is obvious from the curves of Fig. 12, the conventional cell having a uniform liquid crystal layer thickness d has a transmittance of 0 under the condition of u=√3, which is for green light. But the transmittances for the light of red and blue wavelengths cannot be made zero. On the contrary, in the multispace type liquid crystal cell of the curve MG, the transmittance can be made very small for a wide range of wavelengths and therefore the cell can be seen substantially black as a whole when the applied voltage is 0.

Experimental study 2

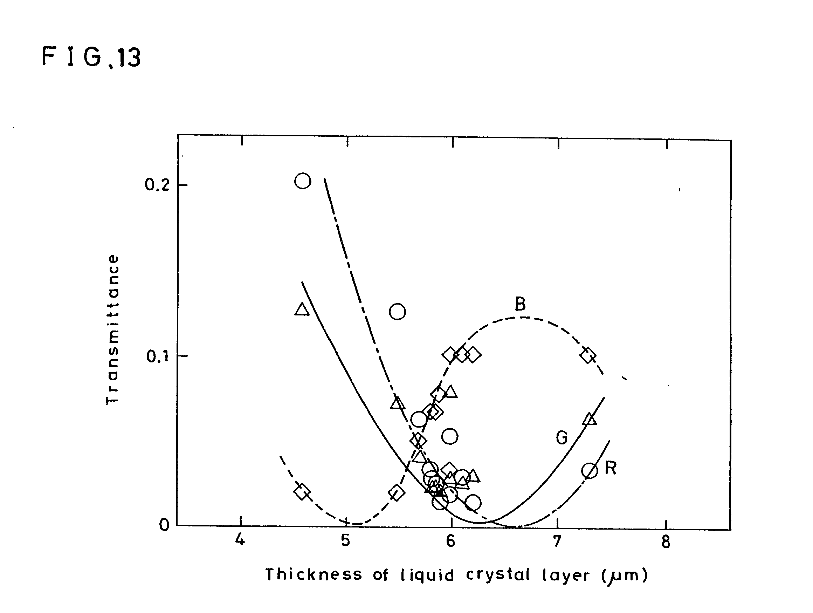

Light transmittances of NB cells illuminated by white scattered light at 0 volt application is normalized by the transmittance of the same cell at the application of saturation voltage, and the normalized transmittances are plotted for the thickness of liquid crystal layer as shown in Fig. 13. As is obvious from this graph, in this case, different dependencies on the liquid crystal layer thickness are observed for blue light (B), green light (G) and red light (R). This is analogous to the thickness dependency of the transmittance expected from the Gooch-Tarry's equation in the qualitative aspect. When the liquid crystal cell is illuminated by scattered light, the relation between the minimum transmittance wavelength ($\lambda_{min}$) vs cell thickness (d) of an NB cell is different from the results of the Gooch-Tarry's equation (1). This, is elucidated.

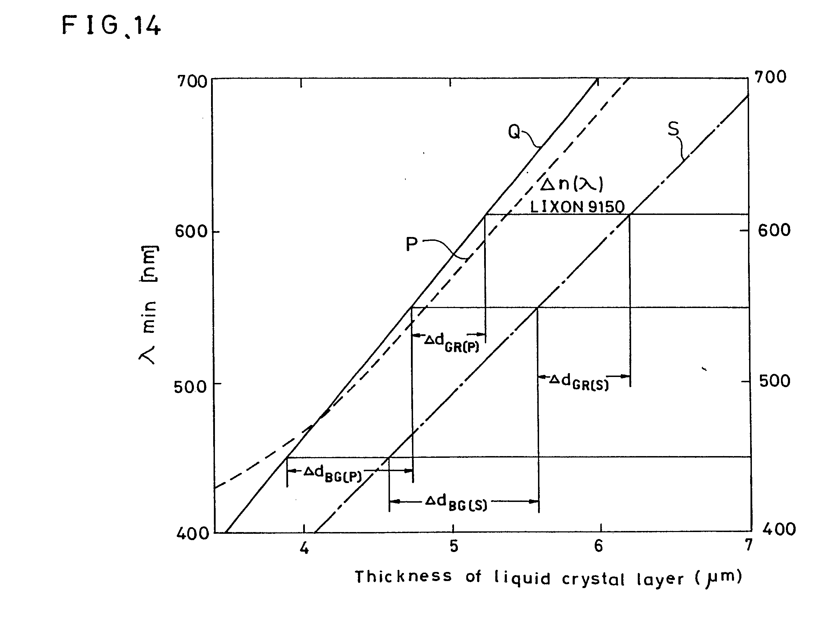

In Fig. 14, the dotted line curve P shows a calculation result induced from the equation (1) by taking account of dependency on refractive index of the liquid crystal. A straight line Q shows a calculation result induced from the equation (1) by setting $\Delta n$ equal 0.1. When the cell is vertically illuminated by parallel light, measurement results of the $\lambda_{min}$ wavelengths shows good agreement with the calculated results. On the other hand, a chain line S of Fig. 14 shows average values of distribution of $\lambda_{min}$ when the liquid crystal cell is illuminated by scattered light. Inventor's many experiments showed that the result points distribute with a width of the space between the curve P and the chain line S around this chain line S.

Since the liquid crystal display apparatus is usually used being illuminated with scattered light rather than with parallel light, the liquid crystal layer thickness d of the display apparatus is preferred to be designed from the value shown by the chain line S. Accordingly, as shown by the summary of the invention, as a measure to make differences in the liquid crystal layer thickness, such a configuration of forming terraced surfaces on at least one of substrates constituting the liquid crystal cell is adopted. Once central wavelengths of three colors are decided, the spaces between terraced surfaces on the parts of the filter elements of blue and green and the difference for green and red parts, namely $\Delta d_{GB}$ and $\Delta d_{GR}$, can be easily obtained from Fig. 14. As is obvious from Fig. 14, optimum terraced surface space for the case of parallel light illumination ($\Delta d_{BG(P)}$, $\Delta d_{GR(P)}$) and optimum terraced surface space for the scattered light illumination ($\Delta d_{BG(S)}$, $\Delta d_{GR(S)}$) show almost analogous values.

6

Though it is preferable that the terraced surface space is strictly designed and so worked in manufacturing, this does not necessarily require very strict limitation. That is, if the relations of the terraced surface gaps or spaces are made to correspond to relation of wavelength of the central lights of the filter elements, the technical advantages of the present invention are effectively performed in comparison with the conventional liquid crystal color display apparatus having a uniform liquid crystal layer.

Embodiment 1

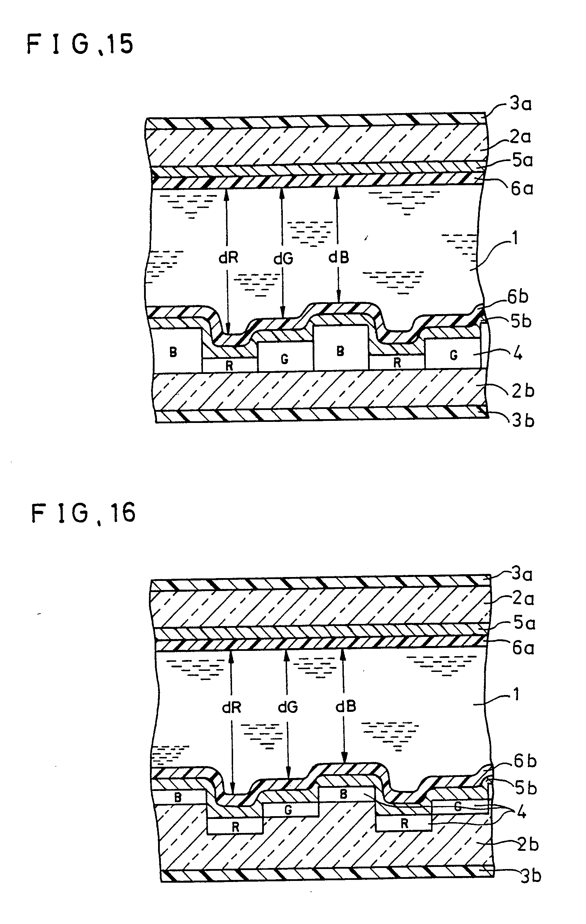

A first example of a concrete configuration of the liquid crystal color display apparatus in accordance with the present invention is shown in the sectional side view of Fig. 15 showing the cross section of a part of the apparatus. As is shown in Fig. 15, the color liquid crystal display apparatus comprises a cell having two substrates 2a and 2b which are disposed in parallel with a predetermined space inbetween thereby forming a closed space the substrates 2a and 2b, which have polarizer layers 3a and 3b attached on outer surface thereof, respectively. The substrates 2a and 2b further have transparent conductive films 5a and 5b and further have aligned films 6a and 6b, respectively. In this first embodiment, a color filter layer 4 is formed on the transparent substrate 2b and under the transparent conductive film 5b. The color filter layer 4 has different thicknesses for R part, G part and B part. Forming of the above-mentioned liquid crystal layer thicknesses $d_R$, $d_G$ and $d_B$ to be 5.4 µm, 4.8 µm and 3.7 µm, respectively, for instance, the thicknesses are selected such as the R part of the color filter layer to be 1 µm, and the G part of the color filter part to be 1.6 µm and the B part of the color filter layer to be 2.7 µm.

As other method to form the color filter 4 of a predetermined pattern, a known process such as three time repetitions of coating of organic material containing gelatin as host material and containing a color dye is used. As other method, screen printing, vapour deposition of pigments and electrolyte coating, etc. may be used.

After forming the color filter 4 having several thicknesses, the transparent conductive film 5b made of, for instance, $In_2O_3$ of $SnO_2$ is formed and the alignment film 6b is formed. As the alignment film 6b, usually such organic material as polyimide or polyvinylalcohol is coated by spinner process or printing, followed by surface lapping. As another method, an oblique vapour deposition of SiO film may be used. Then by assembling the first substrate 2a and the second substrate 2b in such a manner that the gap $d_B$ becomes 3.7 µm, then $d_G$ and $d_R$ are automatically made 4.8 µm and 5.4 µm, respectively. A TN liquid crystal 1 is filled in the space formed by the first substrate 2a and the second substrate 2b. The polarizers 3a and 3b are disposed in a manner that the polarization axis become parallel to each other and also parallel to the wrapping direction of the alignment film 6a and 6b.

Embodiment 2

A second example which has another concrete configuration is described with reference to Fig. 16.

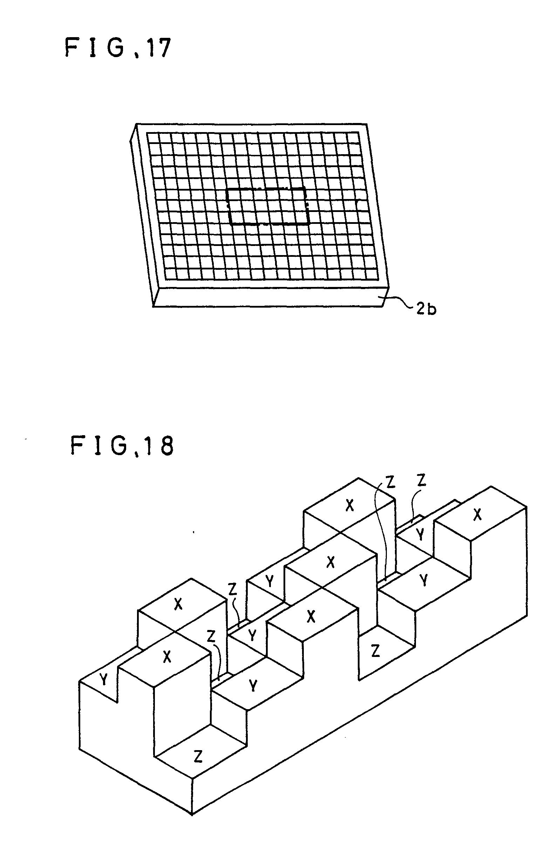

In this example, a lower transparent substrate 2b has a terraced surface having three levels formed in a predetermined pattern. Fig. 17 schematically shows a perspective view of the lower substrate. A small part of the substrate is shown in the enlarged size Fig. 18. Fi. 18 is drawn by magnifying the vertical size about 100 times or more in order to show the terraced surfaces. The terraced transparent substrate 2b is made of a plastic material or of glass and the terraced surface is formed by molding or by etching. In forming the color filter layer 4 on the terraced surface, B parts are formed on the X-marked highest terrace, G parts are formed on the Y-marked medium height and R parts are formed on the Z-parts of lowest level. The plan view disposition of the color filter layer is, for instance as shown in Fig. 5. The forming of the color filter can be made by three times repetitions of coatings of organic materials, selective removal and dyeing. But other method, for instance printing, vapour deposition of pigment and electric field coating or other method may be used. In the actual substrate, the gap between the surfaces of the terraced of the substrate is at largest 1—2 µm, while the length of the terrace is 100 times—1000 times, and therefore the transparent conductive film 5b and the alignment film 6b can be formed with continuity without any difficulty. Accordingly the alignment controlling of the liquid crystal has no difficulty.

Embodiment 3

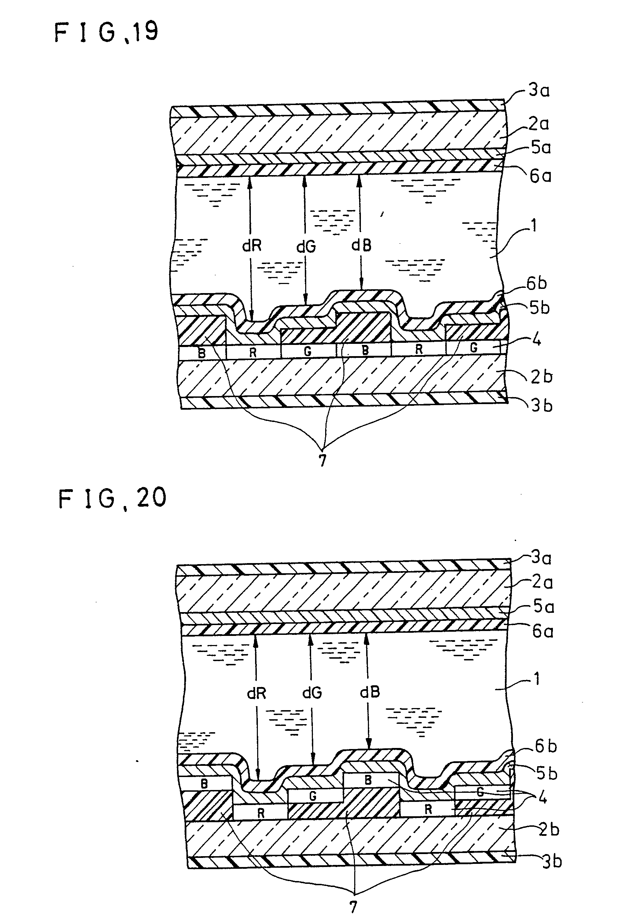

A third actual example is described with reference to Fig. 19. In this example, the color filter layer 4 is directly formed on the inner surface of the substrate 2b, and thereon the transparent film 7 with different thicknesses is formed. Other parts and components and steps of forming are similar to the foregoing examples. The transparent film 7 is formed on the parts G and B of the color filter layer 4 and the parts on the B filter element parts are made thicker. In order to attain the $d_R$, $d_G$ and $d_B$ to be 5.4 µm, 4.8 µm and 3.7 µm, respectively, for instance the transparent film 7 on the G part is formed 0.6 µm, while that on the B parts are 1.7 µm. As the material of the transparent film 7, a material having a good light transmittance in a visible light range (400—700 nm) and having a flat spectral transmittance characteristic is usable. Organic and inorganic material may be used. The coating is made by spinner coating, printing, vapour deposition or sputtering, and undesirable parts are selectively removed after forming. By repeating the method, the above-mentioned transparent film having different thicknesses is made. The transparent film serves to realize the liquid crystal layer having optimum thicknesses. Therefore the transparent film 7 may be provided in other places, as is shown in subsequent examples.

7

Embodiment 4

In Fig. 20, the transparent film having parts of different thicknesses corresponding to the parts of different colors of the color filter layer 4 is formed between the substrate 2b and the color filter layer 4. That is, between the G parts of the color filter 4 and the substrate 2b thinner parts of the transparent film 7 are formed. Between the blue parts of the color filter parts 4 and the substrate 2b, thicker parts of the transparent film 7 are formed. Other parts and components of the apparatus are similar to those of the foregoing examples.

Embodiment 5

In the Example 4, the transparent film 7 is provided on all the filter elements for the G and B parts with different thicknesses corresponding to the colors of the filter elements. The transparent film 7 is formed on the color filter 4 and under the transparent conductive film 5b. The thicknesses of the transparent film 7 are 0.1 μm, 0.7 μm and 1.8 μm for the parts on the R parts, G parts and B parts of the color filter layer 4. Other parts and components and making steps are similar to the foregoing examples.

Embodiment 6

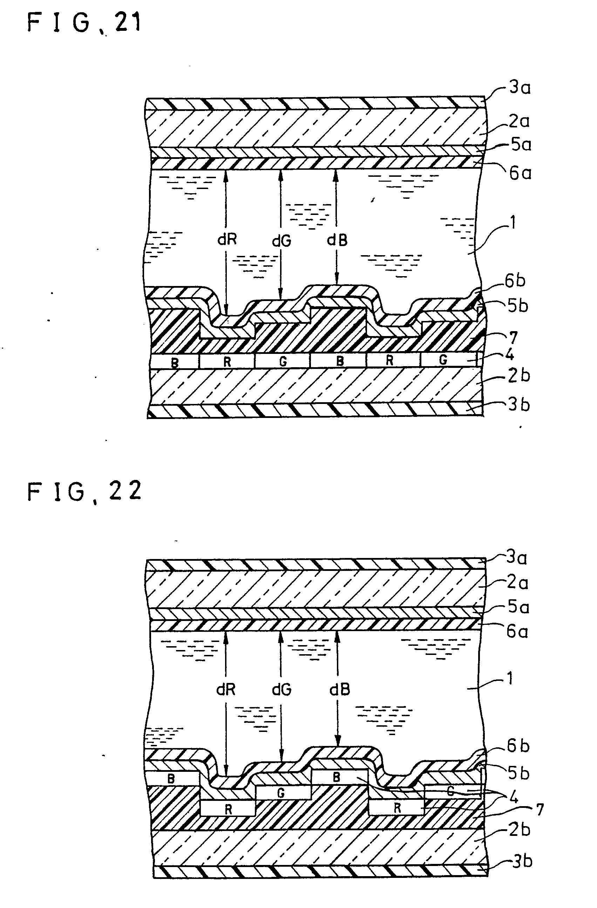

Fig. 22 shows still another concrete example configuration wherein the transparent film 7 having different thicknesses for R parts, G parts and B parts of the color filter 4 is formed under the color filter 4 and on the substrate 2b. The relations of the thicknesses of the transparent film 7 are same as those of the example of Fig. 21.

In the examples of Fig. 20 and Fig. 22, the color filter layer 4 and the transparent 7 are not necessarily in independent configuration from each other. For instance, first the transparent film 7 with a terraced surface is formed on the substrate 2b, the parts corresponding to R filter elements are dyed by masking the parts to correspond to G parts and B parts of the color filter layer 4, and then after masking the parts corresponding to the R parts and B parts the G color is dyed. Finally by masking the parts corresponding to R parts and G parts the B parts are dyed, thereby to form R, G and B dyed filter elements on the transparent film 7. For such making steps, as transparent film, preferably gelatin or the like organic film is appropriate.

Mode of applications

As has been described in detail, the difference from concrete configurations of many examples, and the embodiments is described for the case when the value u is selected to be equal to or around $u=\sqrt{3}$, which is the minimum value of u to give the transmittance T=0 in the equation (1). That is the case when the optical path difference $(d \cdot \Delta n/\lambda)$ is compensated around the value of d of 5 μm in Fig. 8.

On the other hand, in Fig. 8 the transmittance of the three colors becomes 0 at $d_G=10.7$ μm, $d_R=12$ μm and $d_B=12.7$ μm, and the thickness difference of the liquid crystal layer there is fairly small. Accordingly the present invention is also applicable to the cases where $u=\sqrt{15}, \sqrt{35}, \dots$. In case the compensation of the liquid crystal layer thickness is made by the case of adopting the above-mentioned u value, all the thicknesses of the depth of liquid crystal layer or the parts of R, G and B parts of the color filter layer become different from the above-mentioned example.

In the above-mentioned embodiment, the color filter layer is described to have only three kinds colors R, G and B, but the color filter may be of another type having four colors or a different combination of colors which are usable to embody the present invention. Though the color filter layer is formed on only one substrate in the above-mentioned embodiments, the color filter layer may be formed on both substrates. For instance, some color element(s) are formed on one substrate and other color element(s) are formed on the other substrate. In any cases, by selecting the thicknesses of the liquid crystal layer $d_R$, $d_G$ and $d_B$ to be an appropriate value according to the rule described with reference to Fig. 14, the invention can be embodied.

The concept of the present invention is applicable to all kinds of liquid crystal color display apparatus utilizing TN liquid crystal, and therefore, the patterns of the color filter and the corresponding electrodes and the corresponding thickness patterns are not limited to the above-mentioned check pattern matrix, but also may be any pattern. The present invention is of course applicable to the liquid crystal display apparatus wherein MOSFET, TFT (thin film transistor), MIM (metal insulator metal) diodes or the like non-linear or active elements may be formed on at least one substrate. Furthermore, the embodiment is not limited to the transparent type display apparatus but of course is applicable also to reflection type display apparatus.

In the description of some embodiments the NB type is mainly described, but NW type is equally usable only by reversing the levels of the signal.

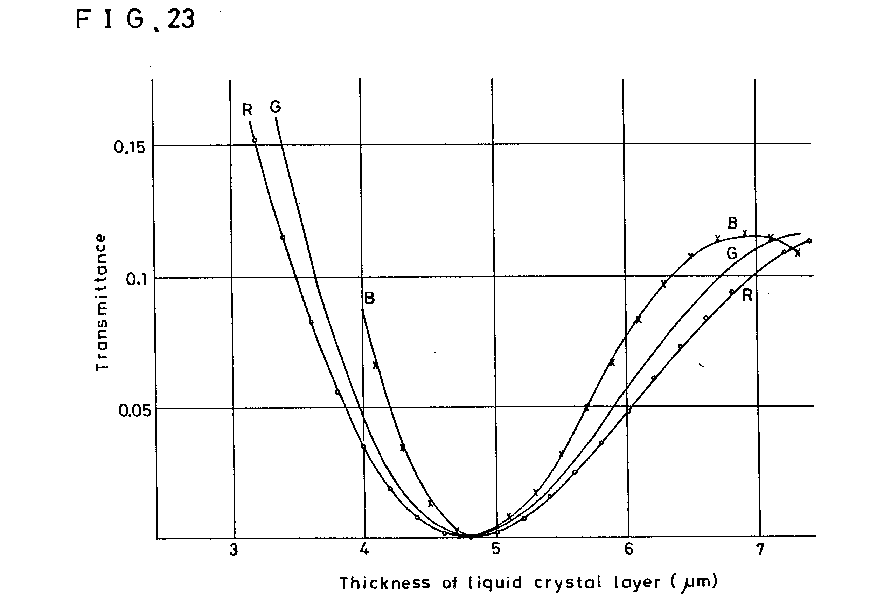

In the embodiment of the present invention, even though the thicknesses of the liquid crystal layer slightly shift to the thicker direction or the thinner direction, such shift induces only simultaneous increases or decreases of the thicknesses of the liquid crystal layer for R parts, G parts and B parts of the color filter from the ideal designed thicknesses. Such simultaneous shiftings of thicknesses do not induce large amounts of light leaking at 0 volt application nor drastic loss of white balance of the display, which have taken place in the prior art apparatus. This is explained with reference to Fig. 23, which is a graph showing the relation between the thicknesses of liquid crystal layer and transmittances for R color light, G color light and B color light, and with reference to Fig. 8 for the relation between the uniform thickness of the liquid crystal layer and spectral transmittances for R, G and B lights.

In the conventional example of the liquid crystal color display apparatus having a uniform thickness, when the thickness is selected about 5.2 µm in the designing the transmittance for red light and green light is small and for blue light is large. In such conventional apparatus, when the thickness of the actually assembled apparatus becomes to 5.7 µm (by increasing 0.5 µm from the designed value), the transmittance for green color increases and for the blue color becomes maximum, thereby making the display panel more bluish. When the thickness of the assembled apparatus becomes to 4.7 µm (by decreasing 0.5 µm from the designed value), the transmittance for blue light decreases and for red light increases, thereby making the display panel reddish. Thus, the conventional apparatus undesirably changes color in a great extent by shift of the thickness of only 0.5 µm. Furthermore, such shifts of color for increase and decrease of the actual thickness from the designed value are in each other opposite directions of color. On the other hand, the curves of Fig. 23 show the effect of shifts of thicknesses from the designed thicknesses of the liquid crystal layer embodying the present invention to the transmittances. In the liquid crystal cell embodying the present invention, since the differences of thicknesses of the liquid crystal layer is given as the terraced inner surfaces of the substrate, the errors of thicknesses of actually assembled cell from the designed values are in the same directions (increases or decreases) and in the same errors of thickness. As is obvious from the curves of Fig. 23, at the central value $d_G=4.8$ µm (at that time, $d_R=5.4$ µm and $d_B=3.8$ µm and transmittances for lights of the R, G and B all are zero), the transmittance becomes 0 for light of all colors. When the thickness $d_G$ shifts by an assembling error from this value to 5.3 µm (by increasing 0.5 µm from the designed value) or to 4.3 µm (by decreasing 0.5 µm from the designed value), in both cases the transmittance for R, G and B lights increases in the similar manner. Although the color becomes slightly whitish by such shifts (any directions of thicker or thinner), the increases of the transmittance in all colors are small, and differences of transmittances of R, G and B light are small. Accordingly the white balance of the display by this liquid crystal cell is kept very good, thereby resulting in no substantial change of the displayed color. Therefore, the liquid crystal cell embodying the present invention has a large tolerance for an error of thickness in assembling. This is a very important fact and feature of the present invention.

Experiments and results

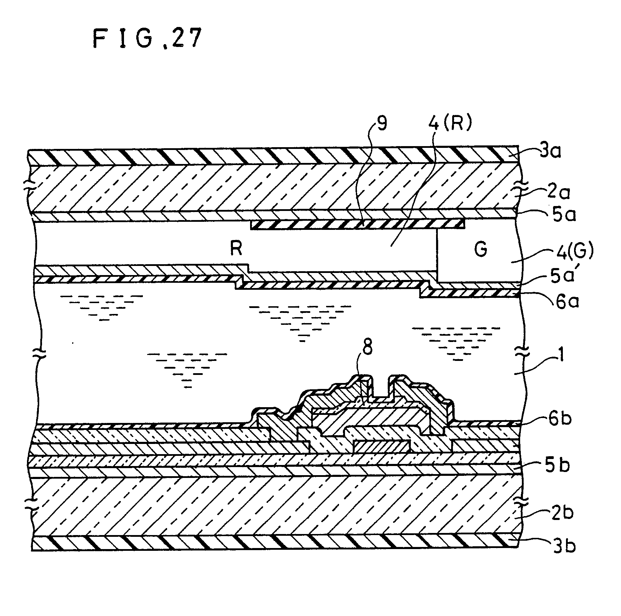

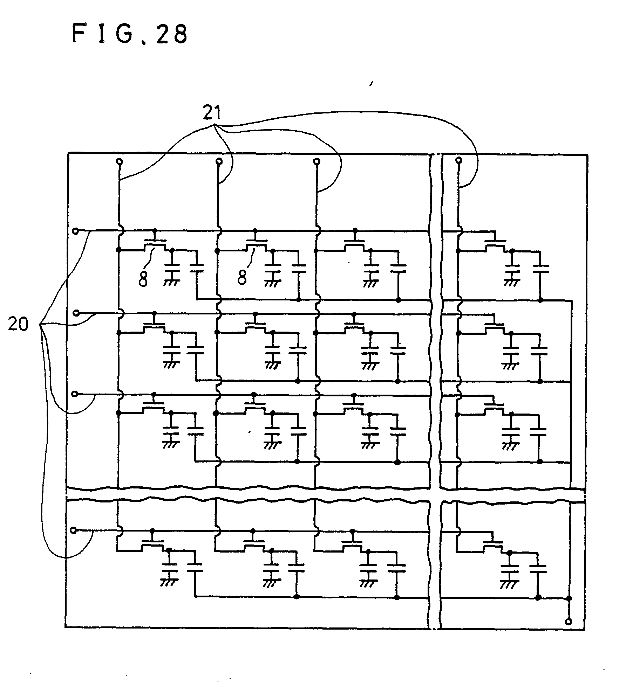

The inventors made a practical color liquid crystal display apparatus having liquid crystal layers with plural thicknesses for R, G and B sections of the color filter layer, combined with amorphous silicon (hereinafter abreviated as a-Si) TFT for application in an image display panel. Components of the image display panel such as TFT array, liquid crystal, polarizer, color filter layers, illumination system, electric circuit for imaging signal generation for operation of the image display panel, etc. have each particular characteristics or perculiar properties. Accordingly, the image display system should be designed and manufactured to achieve a high quality display as a combination of technology in the liquid crystal panel design, driving technology, etc. basing on the above-mentioned characteristics and peculiar properties. Besides the aforementioned measures for simplifying the designing of the liquid crystal display panel, the inventors made trial manufacture of the actual display apparatus. A detailed cross sectional view and a circuit diagram of a-Si TFT-addressed liquid crystal full color display panel are shown in Figs. 27 and 28, respectively. The display panel comprises layer 4 of filter array and the a-Si TFT array are shown in Fig. 28 in the space between the two substrates 2a and 2b to achieve an improvement of the display.

The outline of designing of the display apparatus is as follows. As has been described in detail, in actual use with scattered light, the wavelengths of minimum transmission $\lambda_{min}$ for R, G and B light and thicknesses of the crystal liquid layer at the sections on the color filter elements of the R, G and B colors, are not on the P-curve of Fig. 14, which corresponds to the case of $u=\sqrt{3}$ in the equation (1), but is represented by the S-curve. Provided that the display apparatus is illuminated by the aforementioned fluorescent lamp named PA-LOOK (trademark of Matsushita Electrics Corporation) having principal energy wavelengths of 610 nm, 545 nm and 450 nm for three primary color portions of light, through the inventor's experiments the depths of $d_R=6.4$ µm, $d_G=5.8$ µm and $d_B=4.9$ µm are found to be preferable. Accordingly, the space between the terrace surfaces of the terraced substrate of the display apparatus is $\Delta d_{RG}=0.6$ µm, $\Delta d_{GB}=0.9$ µm. On the inner surface of the glass substrate 2a, black stripes 9 are formed on the section between neighboring color filter element sections, where no image signal is impressed, in order to shield unnecessary light, to improve the contrast and color purity. Furthermore, on the sections immediately above the TFT 8, light masking layer of light transmittance under 0.5% is formed to protect stable operation of the TFT 8. Experiments were made in respect of the above-mentioned trial manufacture display apparatus. The space between the terraced surfaces of the substrate resulting in a difference of thicknesses of the liquid crystal layer is measured by a surface roughness meter. The thickness of the liquid crystal layer 1 confined in the space between the substrate 2a having the filter layer 4 and the substrate 2b having the array of a-Si TFT 8 is measured by interference method. Response characteristics of applied voltage vs transmittances is measured as follows. While light from a halogen lamp is applied through optical fibers and an optical diffusion plate is disposed on one face of the display panel to illuminate the latter. An input voltage of the driver is applied across gate buses 20 and source buses 21 of TFT's array illustrated in Fig. 28, thereby to simultaneously operate all the TFT's within 10 mm×10 mm square area. Transmitted light through the display panel is received by light measuring optical fibers and guided to a photomultiplier.

When a spectral characteristic is necessary, a band path filter having half width of 10 nm is inserted between the measuring optical fiber and the photomultiplier. The contrast is calculated as a ratio of the transmittance at an applied source voltage of 6 $V_{rms}$ and the transmittance of 0 V in this experiment, the transmitted light is observed in a direction vertical to the display panel. The filter used in this experiment has a surface space of $\Delta d_{RG}$=0.9 µm and $\Delta d_{BG}$=0.6 µm. The designed ideal space between R and G sections is 0.6 µm and the designed ideal space between the G and B sections is 0.9 µm.

Operation characteristics of the above-mentioned experimental apparatus are as follows.

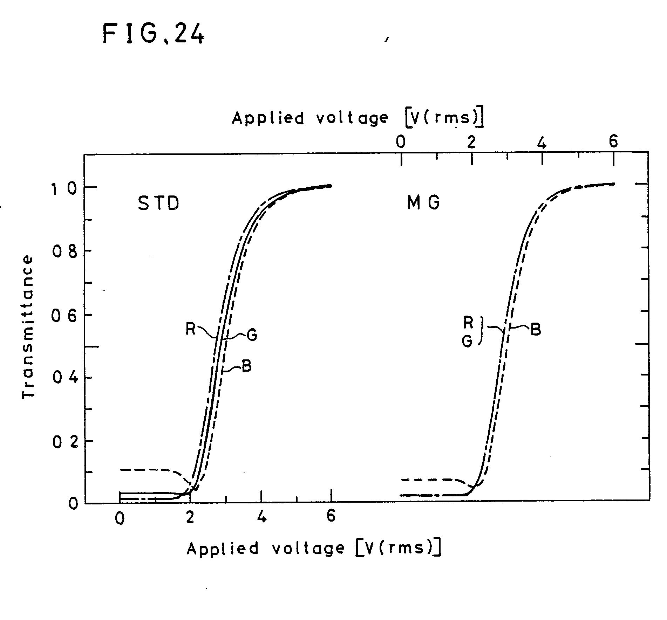

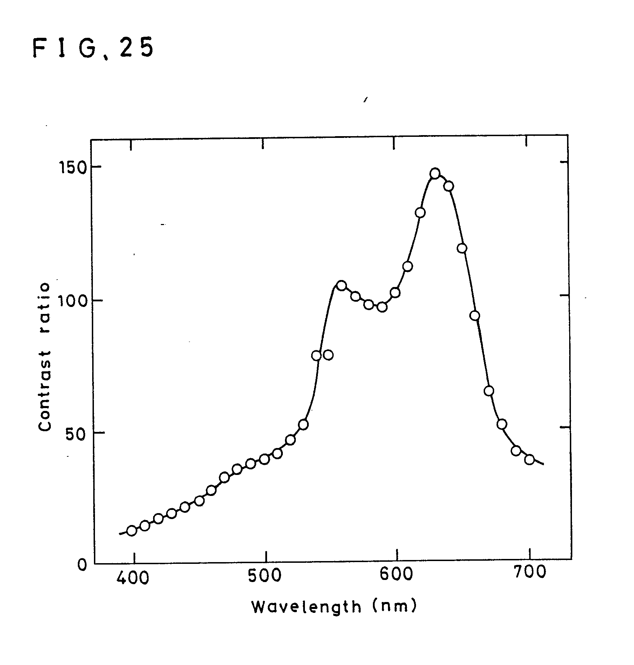

The above-mentioned color liquid crystal display apparatus comprises an array of the TFT 8 of Fig. 28 consisting of 252×240 unit circuits corresponding to the picture elements, and a 2.4 inch diagonal size display panel combined with the above-mentioned color filter layer with plural depths is driven by an applied AC voltage. The characteristic curve of input signal vs transmittance is shown in Fig. 24. Apart from the conventional comparison example shown in the curves STD wherein d is uniformly 6.2 µm, hence showing bluish color at 0 volt application due to difference of the transmittances of three primary colors, the display apparatus of the above-mentioned experiment shows the characteristic shown by the curves MG of Fig. 24, wherein $d_R$=6.62 µm, $d_G$=5.74 µm and $d_B$=5.14 µm. The characteristic curves of red (610 nm) and green (550 nm) agree with each other, and only blue (450 nm) shows a slightly different characteristic. In this apparatus, rise time and fall times, for the light at room temperature and with an applied voltage to make the transmittance to be about 50% of the saturation value, are about 50 msec and about 30 msec, respectively. The difference between the response times for the three colors induced by the space differences is subject to $d^2$-law. Though such differences of response time slightly make coloring of fast moving parts on the display panel, the coloring is moderate and negligible. Next, the contrast of the displayed images is shown in Fig. 25. As is shown in Fig. 25, the contrast is above 30 for the whole range of the wavelengths from 460 nm to 700 nm. Especially, at the wavelengths of 630 nm and 560 nm, the relation between the thickness d and the wavelength of minimum transmission $\lambda_{min}$ are well agreeing with the curve S of Fig. 14. Accordingly the contrast is above 100. For blue color, the contrast is relatively small. This is considered due to leaking of blue color light from the red filter. It is also considered that the reason of lowering apparent blue color contrast is due to simultaneous switching of picture elements of all colors of the liquid crystal.

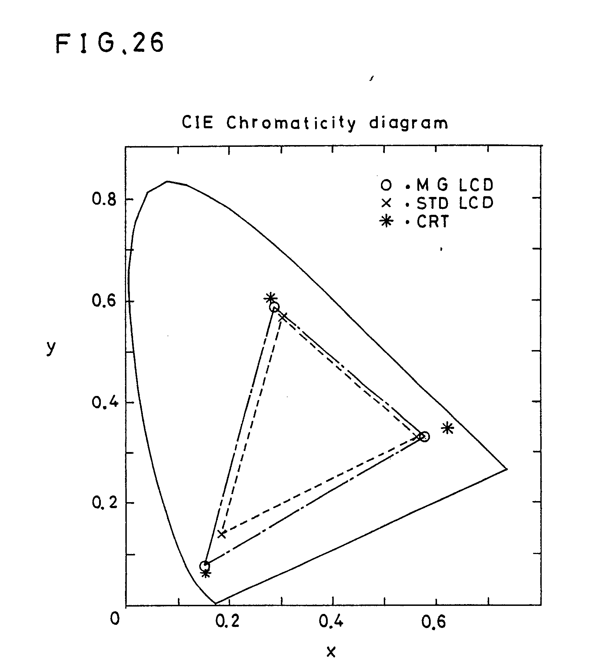

The color reproducibilities are comparatively shown for the conventional liquid crystal display apparatus having a uniform thickness d=6.2 µm by the curves STD, for the embodiment of the present invention with plural thicknesses of liquid crystal layer by the curves MG and for the conventional CRT, in a CIE chromaticity diagram of Fig. 26. As shown by the diagram, by providing multiple thicknesses in the liquid crystal layer, the range of reproduced colors is considerably enlarged. And the reproduced color range is substantially the same as the current CRT except red.

For color balance, different from the conventional liquid crystal display panel, the present display panel can represent good natural colors without voltage compensation.

As is described above, the actual application experiments show that the present invention achieves an increase of contrast and range of color reproduction and color balance.

## Claims

1. A liquid crystal color display apparatus comprising:
a cell having two polarizers (3a, 3b) and two substrates (2a, 2b) forming a closed space therebetween, at least one of said two substrates being transparent,
a plurality of color filters (4) of several different types of spectral transmittance characteristics formed on a plurality of minute sections of at least one of said two substrates.
electrodes (5a, 5b) formed on said substrates for selective application of potentials across the space of said cell at the locations of the different sections, and
a twisted nematic liquid crystal layer (1) confined in said closed space,
characterized in that the space between the two substrates has a plurality of minute sections of different thicknesses out of several chosen thickness values, the locations of these sections corresponding with the locations of the color filters; and the thickness values being chosen in dependence on the spectral transmittance characteristics of the filters and different from each other, such that, individually for the color of each type of the color filters, the zero voltage light leaking arising from the transformation of linearly polarized light into elliptically polarized light during the passage through the twisted nematic liquid crystal, is minimized.

2. A liquid crystal color display apparatus in accordance with claim 1, wherein said color filters comprise three types respectively having spectral transmittance characteristics for mainly passing red light, green light and blue light.

3. A liquid crystal color display apparatus in accordance with claim 2, wherein the thickness of the liquid crystal layer is largest for the sections corresponding to the red, medium for the green, and smallest for the blue color filters.

4. A liquid crystal color display apparatus in accordance with claim 1, 2 or 3, wherein said color filters are provided on the inner surface of one of said substrates.

5. A liquid crystal color display apparatus in accordance with claim 1, 2 or 3, wherein said electrodes are transparent and provided on the inner surfaces of said substrates.

6. A liquid crystal color display apparatus in accordance with claim 2 or 3, wherein said color filters have different thicknesses respectively for said three different types.

7. A liquid crystal color display apparatus in accordance with claim 1, wherein a transparent film is provided in a superposed relation with at least one kind of color filters.

8. A liquid crystal color display apparatus in accordance with claim 2, wherein said cell is illuminated by a white light source emitting a line spectrum comprising red, green and blue components.

**Patentansprüche**

1. Flüssigkristallfarbanzeigevorrichtung, umfassend:

eine Zelle, die zwei Polarisatoren (3a, 3b) und zwei Substrate (2a, 2b) hat, die zwischen sich einen geschlossenen Raum bilden, wobei wenigstens eines der beiden Substrate transparent ist,

eine Mehrzahl von Farbfiltern (4) mehrerer unterschiedlicher Arten von Spektralübertragungscharakteristiken, die an einer Mehrzahl von kleinen Abschnitten wenigstens eines der beiden Substrate gebildet sind,

Elektroden (5a, 5b), die an den Substraten gebildet sind für wahlweises Anlegen von Potentialen an den Raum der Zelle an den Stellen der unterschiedlichen Abschnitte, und

eine verdrehte nematische Flüssigkristallschicht (1), die in dem geschlossenen Raum umgrenzt ist,

dadurch gekennzeichnet, daß der Raum zwischen den beiden Substraten eine Mehrzahl von kleinen Abschnitten unterschiedlicher Dicken aus mehreren ausgewählten Dickenwerten hat, die Anordnungsstellen dieser Abschnitte mit den Anordnungsstellen der Farbfilter korrespondieren, und die Dickenwerte ausgewählt sind in Abhängigkeit von den Spektralübertragungscharakteristiken der Filter sowie voneinander verschieden sind derart, daß, individuell für die Farbe jeder Art der Farbfilter, die Nullspannungslichtstreuung minimiert ist, die sich aus der Transformation von linear polarisiertem Licht zu elliptisch polarisiertem Licht während des Durchganges durch den verdrehten nematischen Flüssigkristall ergibt.

2. Flüssigkristallfarbanzeigevorrichtung nach Anspruch 1, wobei die Farbfilter drei Arten umfassen mit Spektralübertragungscharakteristiken derart, daß sie hauptsächlich rotes Licht, grünes Licht bzw. blaues Licht hindurchtreten lassen.

3. Flüssigkristallfarbanzeigevorrichtung nach Anspruch 2, wobei die Dicke der Flüssigkristallschicht für die der roten Farbe entsprechenden Abschnitte am größten, für die der grünen Farbe entsprechenden Abschnitte mittel und für die der blauen Farbe entsprechenden Abschnitte am geringsten ist.

4. Flüssigkristallfarbanzeigevorrichtung nach Anspruch 1, 2 oder 3, wobei die Farbfilter an der Innenfläche eines der Substrate vorgesehen sind.

5. Flüssigkristallfarbanzeigevorrichtung nach Anspruch 1, 2 oder 3, wobei die Elektroden transparent und an der Innenfläche der Substrate vorgesehen sind.

6. Flüssigkristallfarbanzeigevorrichtung nach Anspruch 2 oder 3, wobei die Farbfilter für die genannten drei unterschiedlichen Arten jeweils unterschiedliche Dicken haben.

7. Flüssigkristallfarbanzeigevorrichtung nach Anspruch 1, wobei ein transparenter Film über wenigstens einer Art von Farbfiltern angeordnet ist.

8. Flüssigkristallfarbanzeigevorrichtung nach Anspruch 2, wobei die Zelle durch eine Weißlichtquelle angeleuchtet wird, die ein Linienspektrum aussendet, welches rote, grüne und blaue Komponenten umfaßt.

**Revendications**

1. Dispositif d'affichage en couleur à cristal liquide comprenant:

— une cellule ayant deux polariseurs (3a, 3b) et deux substrats (2a, 2b) formant entre eux un espace fermé, au moins l'un des deux substrats étant transparent,

— une multitude de filtres de couleur (4) ayant plusieurs types différents de caractéristique de transmittance spectrale formés sur une multitude de minuscules sections d'au moins l'un des deux substrats;

— des électrodes (5a, 5b) formées sur les substrats pour l'application sélective de potentiels à travers l'espace de la cellule aux emplacements des sections différentes, et

— une couche (1) de cristal liquide nématique soumis à torsion confinée dans l'espace fermé,

caractérisé en ce que l'espace entre les deux substrats comporte une multitude de sections minuscules de différentes épaisseurs choisies au sein de plusieurs valeurs d'épaisseur, les emplacements de ces sections correspondant aux emplacements des filtres de couleur; et les valeurs de l'épaisseur étant choisies en fonction de la caractéristique de transmittance spectrale des filtres, et étant différentes les unes des autres, de façon que, individuellement pour la couleur de chaque type de filtres de couleur, la fuite de la lumière pour la tension zéro se produisant par suite de la transformation de la lumière polarisée linéairement en lumière polarisée elliptiquement pendant la traversée du cristal liquide nématique soumis à torsion, soit minimisée.

11

2. Dispositif d'affichage en couleur à cristal liquide selon la revendication 1, dans lequel les filtres de couleur comprennent trois types ayant respectivement une caractéristique de transmission spectrale pour laisser passer principalement la lumière rouge, la lumière verte et la lumière bleue.

3. Dispositif d'affichage en couleur à cristal liquide selon la revendication 2, dans lequel l'épaisseur de la couche de cristal liquide est la plus grande pour les sections correspondant aux filtres de couleur rouge, médiane pour les filtres de couleur verte, et la plus petite pour les filtres de couleur bleue.

4. Dispositif d'affichage en couleur à cristal liquide selon la revendication 1, 2 ou 3, dans lequel les filtres de couleur sont prévus sur la surface intérieure de l'un des substrats.

5. Dispositif d'affichage en couleur à cristal liquide selon la revendication 1, 2 ou 3, dans lequel les électrodes sont transparentes et prévues sur les surfaces intérieures des substrats.

6. Dispositif d'affichage en couleur à cristal liquide selon la revendication 2 ou 3, dans lequel les filtres en couleur ont des épaisseurs différentes respectivement pour les trois types différents.

7. Dispositif d'affichage en couleur à cristal liquide selon la revendication 1, dans lequel une pellicule transparente est prévue en relation superposée avec au moins un type des filtres de couleur.

8. Dispositif d'affichage en couleur à cristal liquide selon la revendication 2, dans lequel la cellule est éclairée par une source de lumière blanche émettant un spectre à raies comprenant des composantes rouge, verte et bleue.

F I G.1 (a)
(Prior Art)

F I G.1 (b)
(Prior Art)

FIG.2 (Prior Art)

FIG.3 (Prior Art)

FIG.4 (Prior Art)

B | R | G | B | R | G

FIG.5 (Prior Art)

| R | G | B | R | G | B | R | G | |
|---|---|---|---|---|---|---|---|---|
| G | B | R | G | B | R | G | B | |
| R | G | B | R | G | B | R | G | |
| B | R | G | B | R | G | B | R | |
| R | G | B | R | G | B | R | G | |
| B | R | G | B | R | G | B | R | |
| G | B | R | G | B | R | G | B | |

FIG.6 (Prior Art)

F I G.7 (Prior Art)

F I G. 8

FIG, 9 (a)

FIG, 9 (b)

FIG.10

Applied Voltage [V(rms)]

LIXON 9150

d = 8.0 μm

700 [nm]
570
510
430

EP 0 152 827 B1

FIG. 11

# F I G.12

FIG.13

Transmittance

Thickness of liquid crystal layer (μm)

FIG. 14

FIG.15

FIG.16

F I G ,17

2b

F I G ,18

F I G ,19

F I G ,20

FIG. 21

FIG. 22

FIG. 23

EP 0 152 827 B1

FIG.24

F I G. 25

FIG.26

CIE Chromaticity diagram

FIG.27

F I G . 28